(19) **Europäisches Patentamt / European Patent Office / Office européen des brevets**

(11) **EP 3 554 138 A1**

(12) **EUROPEAN PATENT APPLICATION**
published in accordance with Art. 153(4) EPC

(43) Date of publication:
**16.10.2019 Bulletin 2019/42**

(21) Application number: **17889459.8**

(22) Date of filing: **22.12.2017**

(51) Int Cl.:
**H04W 40/02** (2009.01)  **G01S 3/14** (2006.01)
**G01S 5/02** (2010.01)  **H04W 84/12** (2009.01)
**H04W 64/00** (2009.01)

(86) International application number:
**PCT/CN2017/118018**

(87) International publication number:
**WO 2018/121437 (05.07.2018 Gazette 2018/27)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD TN**

(30) Priority: **26.12.2016 CN 201611219604
26.12.2016 CN 201611219561**

(71) Applicant: **Huawei Technologies Co., Ltd.
Longgang District
Shenzhen, Guangdong 518129 (CN)**

(72) Inventors:
• **PAN, Chun**
  **Shenzhen**
  **Guangdong 518129 (CN)**
• **LANG, Songping**
  **Shenzhen**
  **Guangdong 518129 (CN)**
• **LIU, Sheng**
  **Shenzhen**
  **Guangdong 518129 (CN)**

(74) Representative: **Kreuz, Georg Maria**
  **Huawei Technologies Duesseldorf GmbH
  Riesstraße 25
  80992 München (DE)**

(54) **METHOD FOR DETERMINING CANDIDATE LINE-OF-SIGHT PATH, AND WIRELESS LOCAL AREA NETWORK DEVICE**

(57) A method for determining a candidate line of sight path and a wireless local area network device are disclosed. In the method, the wireless local area network device receives a signal, where the signal includes radio signals sent by a to-be-identified terminal through a plurality of paths. The radio signal includes a first training sequence, and the signal includes superposition of a plurality of first training sequences transmitted through the plurality of paths. The wireless local area network device matches the signal and a second training sequence to obtain time points at which the plurality of first training sequences transmitted through the plurality of paths are received. The second training sequence is information stored in the wireless local area network device, and the first training sequence and the second training sequence have a same value. The wireless local area network device determines a path of an earliest-received radio signal as a candidate line of sight path. In addition, angle estimation is performed only on a line of sight path, thereby reducing an amount of calculation, effectively reducing a positioning delay, and also reducing a quantity of air interface resources occupied.

FIG. 4

## Description

This application claims priority to Chinese Patent Application No. 201611219604.0 filed with the Chinese Patent Office on December 26, 2016 and entitled "METHOD FOR DETERMINING CANDIDATE LINE OF SIGHT PATH AND WIRELESS LOCAL AREA NETWORK DEVICE", and claims priority to Chinese Patent Application No. 201611219561.6 filed with the Chinese Patent Office on December 26, 2016 and entitled "METHOD FOR IDENTIFYING LINE OF SIGHT PATH AND WIRELESS DEVICE", which are incorporated herein by reference in their entireties.

## TECHNICAL FIELD

This application relates to the field of wireless communications, and in particular, to a method for determining a candidate line of sight path and a wireless local area network device.

## BACKGROUND

A wireless local area network (English: wireless local area network, WLAN) can provide a positioning capability, to complete various services (such as navigation, advertisement push, surrounding service discovery, and people flow monitoring).

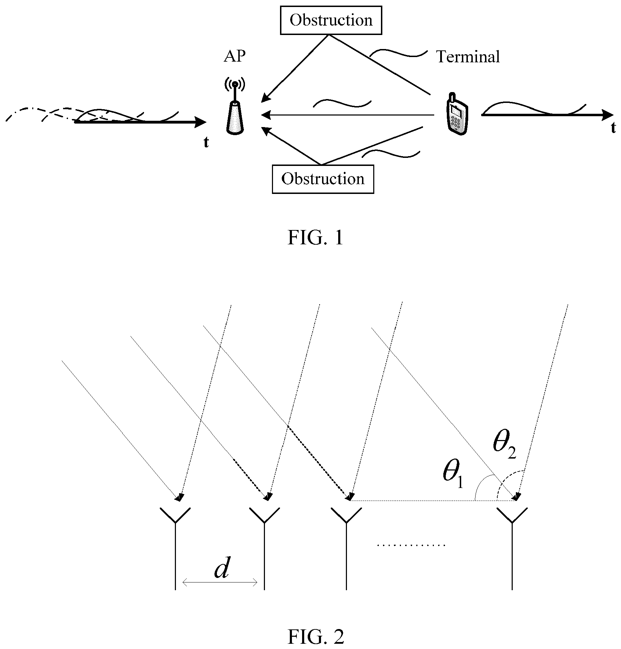

A WLAN device may estimate, by using an antenna array technology, an angle of arrival (English: angle of arrival, AoA) at which a radio signal arrives at a receive end, and position a to-be-identified device based on the AoA. As shown in FIG. 1, due to a reflection entity, there are a plurality of paths for transmitting radio signals between a to-be-identified device (for example, a to-be-identified terminal) and a WLAN device (for example, an access point (English: access point, AP)). However, different paths have different lengths, and the radio signals arrive at the AP at different time points. A signal received by the AP is superposition of radio signals transmitted through the paths with different delays. An AoA of a radio signal transmitted through a line of sight (English: line of sight, LOS) path is an accurate angle of the to-be-identified terminal. Therefore, the AP device needs to determine the AoA of the LOS path between the to-be-identified terminal and the AP.

## SUMMARY

This application provides a method for determining a candidate line of sight path and a wireless local area network device. The method reduces computational complexity and reduces a quantity of air interface resources occupied.

According to a first aspect, a method for determining a candidate line of sight path is provided. The method may include: receiving, by a WLAN device, a signal. The signal includes radio signals sent by a to-be-identified device through a plurality of paths. The radio signal includes a first training sequence, and the signal includes superposition of a plurality of first training sequences transmitted through the plurality of paths. On a WLAN, the first training sequence is a long training field (English: long training field, LTF) in the radio signal sent by the to-be-identified terminal. There is a transmission delay among the plurality of paths, and radio signals that arrive at the AP through all the paths are superposed to form the signal. The WLAN device matches the signal and a second training sequence to obtain time points at which a plurality of first training sequences transmitted through the plurality of paths are received. The second training sequence is information stored in the WLAN device, and the first training sequence and the second training sequence have a same value. The WLAN device determines a path of an earliest-received radio signal as a candidate line of sight path. The earliest-received radio signal is corresponding to a first time point of the time points.

Before the WLAN device communicates with the to-be-identified device, the WLAN device stores the second training sequence, and the to-be-identified device stores the first training sequence. The first training sequence and the second training sequence have a same value. A training sequence in the radio signal is unique. A LOS path is a shortest transmission path between the WLAN device and the to-be-identified device. Therefore, a radio signal propagated along the LOS path arrives at the WLAN device earliest, and based on good correlation of the training sequence, the path of the earliest-received radio signal is determined as a candidate line of sight path. Because of the characteristic of the training sequence, a high distinguishing capability in time domain is provided in this method. The to-be-identified device needs to send only one radio signal, and the wireless device may find the candidate line of sight path.

In an optional implementation, the matching, by the WLAN device, the signal and a second training sequence includes: performing, by the WLAN device, a correlation operation on the signal and the second training sequence to obtain a plurality of pulse signals; and using, by the WLAN device, occurrence time points of peak values of the plurality of pulse signals as the time points at which the plurality of first training sequences are received.

The WLAN device obtains, based on the good correlation of the training sequence, a distribution status of time points in time domain at which the first LTFs arrive at the WLAN device through a plurality of paths, to determine the path of the earliest-received radio signal as the candidate line of sight path.

In an optional implementation, the WLAN device includes a plurality of antennas, and each of the plurality of antennas receives a different signal. That the WLAN device matches the signal and a second training sequence to obtain time points at which a plurality of first training sequences transmitted through the plurality of paths are received includes: The WLAN device separately matches the signal received by each of the plurality of antennas and the second training sequence to obtain the time points at which the plurality of first training sequences transmitted through the plurality of paths are received by the antennas. That the wireless device determines a path of an earliest-received radio signal as a candidate line of sight path includes: The wireless device separately determines a time point at which a radio signal is received earliest by each of the plurality of antennas, and separately determines, based on the time point at which the radio signal is received earliest by each of the plurality of antennas, an angle of arrival of a path through which the earliest-received radio signal is transmitted. If the path is a LOS path, the angle of arrival may be used to determine a position of the to-be-identified terminal.

In an optional implementation, when the wireless device determines that a ratio of an energy of a radio signal transmitted through the candidate line of sight path to a total energy of the radio signals transmitted through the plurality of paths is greater than a threshold, the wireless device determines that candidate line of sight path is the LOS path.

According to a second aspect, a wireless local area network device is provided. The wireless local area network device has a function of implementing a behavior of the wireless local area network device in the foregoing method practice. The function may be implemented by hardware, or may be implemented by hardware by executing corresponding software. The hardware or the software includes one or more modules corresponding to the function. According to a third aspect, a wireless local area network device is provided. The wireless local area network device may include an antenna, a processor, and a memory.

The antenna is configured to receive a signal. The signal includes radio signals sent by a to-be-identified terminal through a plurality of paths. The radio signal includes a first training sequence, and the signal includes superposition of a plurality of first training sequences transmitted through the plurality of paths.

The processor is configured to match the signal and a second training sequence to obtain time points at which the plurality of first training sequences are received. The second training sequence is information stored in the memory, and the first training sequence and the second training sequence have a same value.

The processor is further configured to determine a path of an earliest-received radio signal as a candidate line of sight path. The earliest-received radio signal is corresponding to a first time point of the time points.

According to another aspect, a computer storage medium is provided. The computer storage medium is configured to store a computer software instruction used for the wireless local area network device, and the computer software instruction includes a program designed for executing the foregoing aspects.

## BRIEF DESCRIPTION OF DRAWINGS

FIG. 1 is a schematic diagram of a communication scenario between a to-be-identified terminal and a wireless local area network device;

FIG. 2 is a schematic diagram of a scenario in which a uniform linear array receives a radio signal;

FIG. 3 is a schematic diagram of a principle for positioning based on an angle of arrival;

FIG. 4 is a schematic flowchart of a method for determining a candidate line of sight path according to an embodiment of the present invention;

FIG. 5 is a diagram of coordinate distribution of multipath propagation in time and space;

FIG. 6 is a schematic diagram of a scenario in which communication is performed between a to-be-identified terminal and an AP by using a plurality of paths according to an embodiment of the present invention;

FIG. 7 is a schematic diagram of a process of receiving a radio signal by an access point according to an embodiment of the present invention;

FIG. 8 is a schematic diagram of a process in which correlation is performed between a plurality of superposed first training sequences and a second training sequence according to an embodiment of the present invention;

FIG. 9 is a schematic diagram of a process of obtaining an angle of arrival of a line of sight path according to an embodiment of the present invention;

FIG. 10 is a schematic structural diagram of a wireless local area network device according to an embodiment of the present invention; and

FIG. 11 is a schematic structural diagram of a wireless local area network device according to an embodiment of the present invention.

**DESCRIPTION OF EMBODIMENTS**

FIG. 1 is a flowchart of Embodiment 1 of a registration method of a network device according to the present invention. As shown in FIG. 1, the method in this embodiment may include the following.

The technical solutions in embodiments of the present invention are further described in detail with reference to accompanying drawings and the embodiments as follows.

A communication method provided in this application is applied to a communications network in a wireless communication scenario, for example, a wireless local area network (WLAN). The WLAN may include a terminal and a network device. The terminal in this application may be a device with a wireless communication function such as a handheld device, an in-vehicle device, a wearable device (English: wearable device), or a computing device. The network device in this application may be a WLAN access point (English: access point, AP).

A physical layer convergence procedure (English: physical layer convergence procedure, PLCP) preamble of a WLAN frame includes a short training field (English: short training field, STF) and a long training field (English: long training field, LTF). PLCP preambles of frame structures in different physical-layer encoding manners have different LTFs. An LTF may include a legacy long training field (English: legacy-long training field, L-LTF), a high throughput long training field (English: high throughput-long training field, HT-LTF), or a very high throughput long training field (English: very high throughput-long training field, VHT-LTF). The LTF is a string of symbols and has a fixed value. A receive party and a transmit party use a same LTF, and both know a value of the LTF. The LTF is used to implement carrier frequency calibration, channel estimation, and synchronization (time synchronization and frequency synchronization) between the receive party and the transmit party. To implement synchronization, a sequence of the LTF has good autocorrelation in time domain. In other words, a frequency-domain sequence is transformed into a time-domain sequence by performing inverse Fourier Transform, and satisfies $R(ift(L), ift(L)) \approx \delta(n)$.

L represents a frequency-domain of the LTF, ift() represents inverse Fourier Transform, R() represents a related function, and $\delta(n)$ represents a pulse function. The pulse function has a non-zero value only when an independent variable is 0, and is 0 when an independent variable is not 0. The pulse function whose value is 1 when the independent variable is 0 is also referred to as a Dirac delta $\delta$ function. The pulse function may be obtained by performing a correlation operation on ift(L) and another ift(L).

The STF is also a training sequence known to both the receive party and the transmit party, and is a sequence shorter than the LTF sequence. After the correlation operation is performed on symbols in a sequence in a first STF, a string of pulse signals formed based on a pulse function and distributed in time domain are obtained. A length of a sequence of the STF is limited, so that interference is caused to a pulse signal in a sequence, of a next STF, connected to the sequence of the first STF. Consequently, an accurate time point at which each pulse signal is generated cannot be obtained. Therefore, the candidate LOS path is determined by using the LTF in this application.

The AP may obtain an AoA by using a phase difference between radio signals received by different antenna elements in a uniform linear array (English: uniform linear array, ULA) antenna. As shown in FIG. 2, the phase difference between the radio signals received by the different antenna elements in the uniform linear array is related to the AoA of the radio signal. The AP may obtain the AoA after collecting phase information of each antenna element. Specifically, the to-be-identified device sends radio signals by using a plurality of paths. The radio signal transmitted through each path is a duplicate of the radio signal sent by the to-be-identified device, and has an LTF. A sequence in the LTF is a long training sequence.

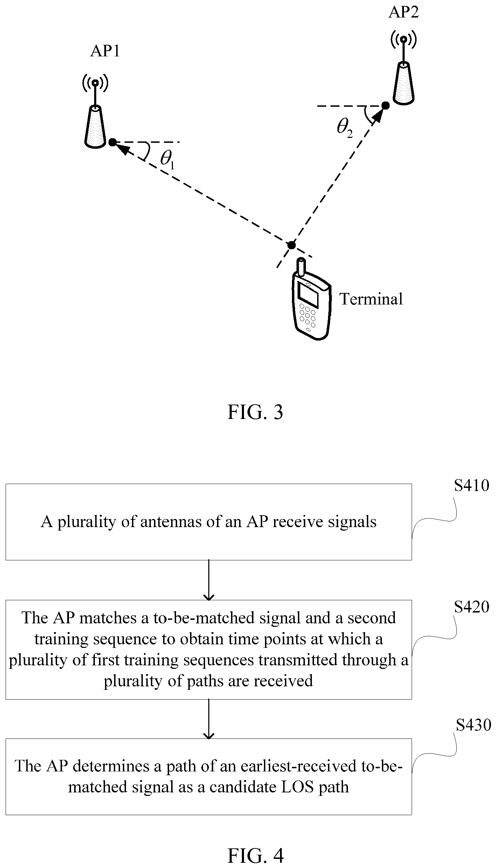

An antenna array of the WLAN device may be a uniform linear array (2 to 4 antenna elements), and the WLAN device receives the radio signal by using an antenna. The WLAN device identifies and extracts the sequence of the LTF in the radio signal based on high autocorrelation of the sequence of the LTF, obtains distribution of an arrival time point of the radio signal transmitted through each path, and determines a path of the radio signal that arrives at the WLAN device earliest is transmitted. The LOS path is a shortest propagation path. In other words, the radio signal transmitted through the LOS path arrives at the WLAN device earliest. Therefore, the path of the earliest-arrived radio signal may be selected as the LOS path. The LOS path includes accurate angle information, and therefore angle estimation of an angle of arrival is performed for the LOS path to obtain the AoA of the LOS path. According to an AoA-based positioning model shown in FIG. 3, if an obtained AoA of a LOS path between the to-be-identified device and the AP1 and an obtained AoA of a LOS path between the to-be-identified device and the AP2 are $\theta 1$ and $\theta 2$, respectively, an intersection point of the AoAs is a position of the to-be-identified device.

The following describes an example in which a to-be-identified device is a to-be-identified terminal and a WLAN device is an AP.

FIG. 4 is a schematic flowchart of a method for determining a candidate line of sight path according to an embodiment of the present invention. As shown in FIG. 4, the method may include the following steps.

Step 410: A plurality of antennas of an AP receive a signal, where the signal include radio signals sent by a to-be-identified terminal through a plurality of paths, and the signal include a to-be-matched signal.

The radio signal includes a first training sequence. The to-be-matched signal is superposition of a plurality of first training sequences transmitted through a plurality of paths to each antenna. The first training sequence is a training sequence in the radio signal sent by the to-be-identified terminal, for example, an LTF. "First" is not a sequence number, but is a part of a name of a training sequence in a signal, and is used to distinguish the first training sequence from a training sequence that is stored in the AP and that is used to match a signal. All training sequences in the radio signal sent by the to-be-identified terminal are the first training sequences. For example, the AP includes a uniform linear array. The to-be-identified terminal sends a radio signal, and the radio signal may be transmitted to an antenna of the AP through a plurality of paths such as a direct path, a reflection path, or a scattering path. The radio signal includes a first LTF. The radio signal transmitted through each path is a duplicate of the radio signal sent by the to-be-identified terminal, and has the first LTF.

There is a transmission delay among the plurality of paths, and radio signals that arrive at the AP through all the paths are superposed to form the signal.

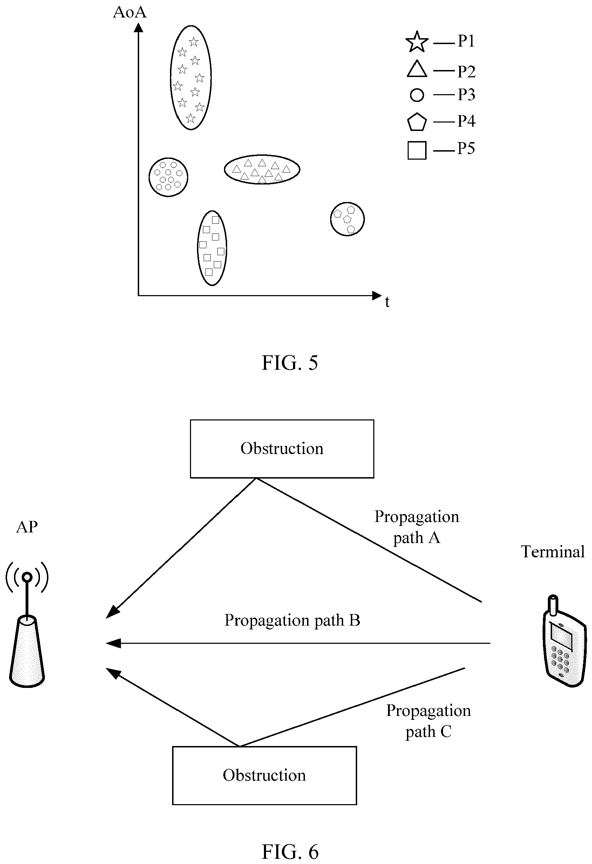

Optionally, the AP may use a clustering method conventionally to distinguish between the plurality of paths through which the radio signal is transmitted. The AP may collect a plurality pieces of sample data, determine a LOS state of the to-be-identified terminal in the clustering manner, and determine the LOS path of the to-be-identified terminal. As shown in FIG. 5, data of each sample is represented by using one point in the coordinate diagram. Each sample is a radio signal received by the AP through one path. A lateral axis of the coordinate diagram represents a time point t at which each sample is received, and a vertical axis represents an AoA of the sample. The to-be-identified terminal sends the plurality of radio signals. Each radio signal arrives at the AP through the plurality of paths and is received by the AP. Because of moving continuity of the to-be-identified terminal, an angle of each path also changes continuously. Therefore, the AP performs clustering on points in the coordinate diagram. After clustering, the AP obtains the plurality of paths through which the radio signal is transmitted. Each shape of clustered points in the coordinate diagram represents a path, such as P1, P2, P3, P4, and P5. Each path in the coordinate diagram may be either an NLOS path or a LOS path. The NLOS path is a path other than the LOS path, such as a reflection path, a scattering path, or a refraction path. The AP may identify the LOS path of the AP based on a dispersion degree (equivalent to a size of a circle in the coordinate diagram) of clustered points of each path. However, when the to-be-identified terminal moves fast, even though there is a LOS path between the to-be-identified terminal and the AP, a dispersion degree of clustered points of the LOS path is also high. Consequently, the LOS path cannot be identified. It can be learned that in the clustering method, the plurality of paths through which the radio signals are transmitted are first identified, and then the LOS path is determined based on the dispersion degree of the clustered points. The LOS path cannot be identified accurately by using the clustering method, but the plurality of paths can be distinguished accurately. Therefore, the AP may use the clustering method to distinguish between the plurality of paths through which the radio signals are transmitted.

When using the clustering method to distinguish between the plurality of paths through which the radio signals are transmitted, the AP may configure a plurality of antennas (for example, three or four antennas) to improve clustering accuracy, so that an estimated AoA is relatively accurate, and the LOS path can be identified in a better manner. This reduces a possibility of energy superposition of the radio signals on the paths caused by that the AP cannot distinguish between two or more paths, and incorrectly identifies the two or more paths as one path.

Optionally, the radio signal transmitted through each path has a respective propagation delay, and therefore a signal r received by the AP may be mathematically expressed as follows:

$$r(t) = \sum_{i=1}^{N} h_i L(t - \tau_i)$$

(Formula 1)

$\tau_i$ represents a delay corresponding to an $i^{th}$ path, $h_i$ represents a complex gain for the first LTF on the $i^{th}$ path, L represents a value of an LTF, N represents a quantity of paths, and t represents an independent time variable in time domain.

Optionally, in frequency domain, a structure of an LTF in an orthogonal frequency division multiplexing (English: orthogonal frequency division multiplexing, OFDM) frame may be expressed as:

$$L_{-26,26} = \{1, 1, -1, -1, 1, 1, -1, 1, -1, 1, 1, 1, 1, 1, 1, -1, -1, 1, 1, -1, 1, -1, 1, 1, 1, 1, 0,$$
$$1, -1, -1, 1, 1, -1, 1, -1, 1, -1, -1, -1, -1, -1, 1, 1, -1, -1, 1, -1, 1, -1, 1, 1, 1, 1\}$$

.

L includes 53 elements. Sequences of the elements are -26, -25, ..., -1, 0, 1, 2 ... 25, and 26. Each sequence number represents a sequence number of a subcarrier in frequency domain in an OFDM system. An element corresponding to each sequence number represents data sent on the subcarrier. For example, 1 is sent on the subcarrier -26, and 0 is sent on the subcarrier 0.

The to-be-matched signal included in the signals received by the AP is superposition of a plurality of LTFs with different complex gain information and different delays.

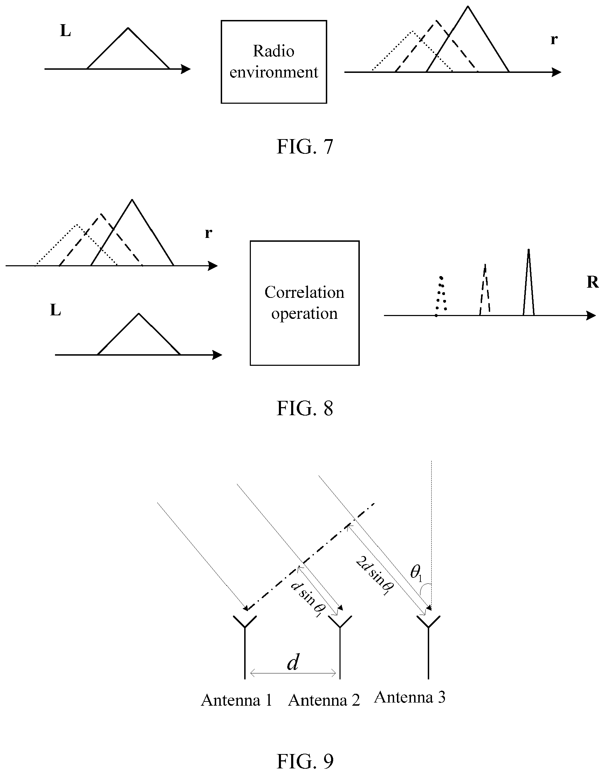

For example, an antenna element of the AP receives, through three paths, radio signals sent by the to-be-identified terminal. As shown in FIG. 6, the three paths are a path A, a path B, and a path C. The radio signal includes a first training sequence L. By using a radio environment, the AP receives a signal r including superposition of three first training sequences, as shown in FIG. 7.

Step 420. The AP matches the to-be-matched signal and a second training sequence to obtain time points at which a plurality of first training sequences transmitted through the plurality of paths are received, where the second training sequence is information stored in the AP, and the first training sequence and the second training sequence have a same value. "Second" is not a sequence number, but a part of a name of a training sequence stored in the AP, and is used to distinguish a second training sequence from a training sequence in a signal.

The AP performs down conversion and analog-to-digital conversion on a collected radio signal to obtain a digital signal. A correlation operation is performed on a digital signal of each antenna and the second training sequence stored in the AP to obtain a corresponding pulse signal. The first training sequence sent by the to-be-identified terminal and the second training sequence stored in the AP are a same training sequence, and have same data information.

The AP separates, based on a characteristic of a pulse signal, the plurality of superposed first training sequences to obtain distribution of each first training sequence in time domain. Optionally, a mathematical expression of the pulse signal may be expressed as:

$$R\big(r(t),L\big) = R\left(\sum_{i=1}^{N} h_i L(t-\tau_i), L\right) \approx \sum_{i=1}^{N} h_i \delta(t-\tau_i) \qquad \text{(Formula 2)}$$

L represents a value of a training sequence, and t represents an independent time variable in time domain.

The pulse signal is a function about a path delay. If $t = \tau_i$, $\delta(t-\tau_i)$ is not zero. Therefore, R(r(t),L) includes a plurality of pulse signals, and occurrence time points of peak values of the pulse signals are $\tau_i$. $\tau_i$ represents a delay of an $i^{th}$ path, that is, a time period for receiving an LTF propagated along the $i^{th}$ path. Duration between a start time of the radio signal and a start time of the LTF is fixed, and therefore the occurrence time points of the peak values of the pulse signals may be used as the time point at which the radio signal propagated along the $i^{th}$ path is received. A training sequence has good autocorrelation in time domain. Therefore, radio signals received at close time points can be distinguished between each other by using the LTF to identify a time point at which the radio signal is received. In other words, a high distinguishing capability in time domain is provided. The to-be-identified device needs to send only one radio signal, and the WLAN device may find a candidate line of sight path.

For example, an antenna element of the AP receives, through a path A, a path B, and a path C, radio signals sent by the terminal. The AP performs a correlation operation on a second training sequence L and the signal r that is obtained by superposing three first training sequences received by the AP. Data information of the second training sequence is the same as data information of the first training sequence. The AP obtains a pulse signal δA on the path A, a pulse signal δB on the path B, and a pulse signal δC on the path C. It can be learned that the pulse signals represent a distribution status of the three paths in time domain, and each pulse signal is corresponding to one path, as shown in FIG. 8.

Step 430: The AP determines a path of an earliest-received to-be-matched signal as a candidate LOS path, where the earliest-received radio signal is corresponding to a first time point of the time points.

The LOS path is a path through which the radio signal is transmitted without an obstruction between the AP and the to-be-identified terminal. The LOS path is not affected by an obstruction (receives no interference), and therefore the LOS path may include accurate angle information and the radio signal transmitted through the LOS arrives at the AP earliest.

The AP performs a correlation operation on the first training sequence and the second training sequence to obtain distribution of the pulse signals in time domain. The AP separately determines, based on the time points at which the to-be-matched signals are received by all the antennas through the plurality of paths, a time point at which the to-be-matched signal is received earliest by each antenna, and separately determines the path of the to-be-matched signal received earliest by each antenna as the candidate LOS path.

If the LOS path between the AP and the to-be-identified terminal is obstructed, the radio signal arrives at the AP through an NLOS path. Among radio signals arriving at the AP, there is a radio signal that arrives at the AP earliest. Therefore, the radio signal propagated along the LOS path definitely arrives at the AP earliest. However, a radio signal arriving at the AP earliest is not necessarily propagated along the LOS path. Therefore, the AP further determines whether the candidate LOS path is a LOS path. There are several methods for determining whether the candidate LOS path is a LOS path. For example, if a strength of the radio signal propagated along the candidate LOS path is greater than a strength threshold, the AP determines that the candidate LOS path is a LOS path. For another example, if an AoA change of a candidate LOS path of each of a plurality of radio signals sent by the to-be-identified terminal is less than an angle threshold, the AP determines that the candidate LOS path is a LOS path. Still for example, when a ratio of an energy of the radio signal transmitted through the candidate LOS path to a total energy of radio signals transmitted through the plurality of paths is greater than a ratio threshold, the AP determines that the candidate LOS path is a LOS path.

Further, after the AP determines that the candidate LOS path of each of the plurality of antennas is the LOS path, the AP determines an angle of arrival based on a phase of each LOS path.

In FIG. 9, the AP uses a uniform linear array. The uniform linear array includes an antenna 1, an antenna 2, and an antenna 3. An antenna spacing between the three antennas is d, the three antennas simultaneously receive radio signals transmitted through three paths, and an included angle between the LOS path and the antenna array is an angle of arrival θ1. The antenna 1 is used as a reference antenna, and it can be obtained through calculation that a phase of the antenna 2 is dsinθ1, and a phase of the antenna 3 is 2 dsinθ1. A phase difference between antennas may be measured, d is known, the AP obtains that a phase difference between the antenna 2 and the antenna 3 is dsinθ1, and therefore the angle θ1 is obtained through calculation. In the foregoing method, angle estimation is performed in a scenario of the uniform linear array, and another type of antenna array may be used to perform angle estimation. This is not described in this embodiment of the present invention.

Further, after the AP determines the angle of arrival of the LOS path, the AP extracts an angle characteristic from physical-layer data, such as a time point at which the radio signal is received, an angle of arrival, and related information about the to-be-identified terminal such as a time point at which the radio signal is sent and identification information of the to-be-identified terminal. The information is uploaded to a server for classification processing. The server performs matching based on information such as a Medium Access Control (English: medium access control, MAC) address of a corresponding terminal and a time point at which the radio signal is received, for example, identifies the to-be-positioned terminal and determines whether an angle of arrival is calculated based on radio signals received at a same time point, and merges the information to position the to-be-identified terminal.

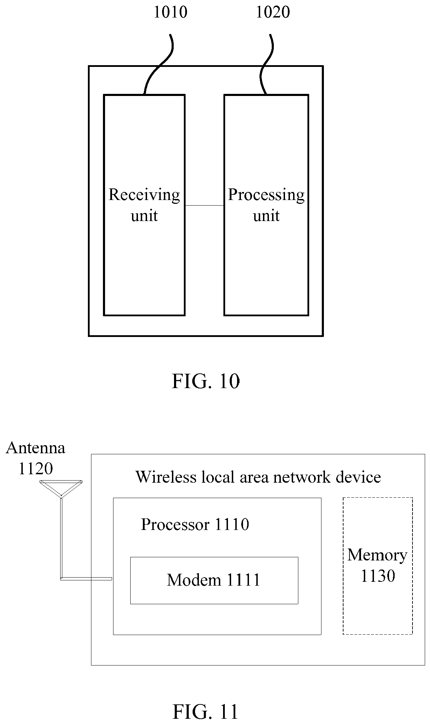

In the foregoing embodiment of this application, the AP matches the to-be-matched signal of received signals and the second training sequence stored in the AP to obtain the time points at which the plurality of first training sequences transmitted through the plurality of paths are received, so as to determine the path of the earliest-received radio signal as the candidate line of sight path. After the AP determines the candidate line of sight path as the LOS path, the AP performs angle estimation on a line of sight path based on phase information of the line of sight path corresponding to each antenna to obtain the angle of arrival of the line of sight. In this method, the AP may identify the LOS path by using the received radio signal, and performs angle estimation only on the LOS path, thereby reducing an amount of computation, effectively reducing a positioning delay, and reducing a quantity of air interface resources occupied. FIG. 10 is a possible schematic structural diagram of a wireless local area network device in the foregoing embodiments. The wireless local area network device includes at least a receiving unit 1010 and a processing unit 1020.

The receiving unit 1010 is configured to receive a signal. The signal includes radio signals sent by a to-be-identified terminal through a plurality of paths. The radio signal includes a first training sequence, and the signal includes superposition of a plurality of first training sequences transmitted through the plurality of paths.

The processing unit 1020 is configured to match the signal and a second training sequence to obtain time points at which the plurality of first training sequences are received. The second training sequence is information stored in the wireless local area network device, and the first training sequence and the second training sequence have a same value.

The processing unit 1020 is further configured to determine a path of an earliest-received radio signal as a candidate line of sight path. The earliest-received radio signal is corresponding to a first time point of the time points.

Optionally, the processing unit 1020 is configured to: perform a correlation operation on the signal and the second training sequence to obtain a plurality of pulse signals; and use occurrence time points of peak values of the plurality of pulse signals as the time points at which the plurality of first training sequences are received.

Optionally, the device further includes a plurality of receiving units 1010, and each of the plurality of receiving units 1010 receives a different signal.

The processing unit 1020 is configured to separately match a signal received by each of a plurality of antennas and a second training sequence to obtain time points at which the plurality of first training sequences transmitted through the plurality of paths are received by the antennas. The processing unit 1020 is further specifically configured to separately determine a time point at which a radio signal is received earliest by each of the plurality of antennas, and separately determine, based on the time point at which the radio signal is received earliest by each of the plurality of antennas, an angle of arrival of a path through which the earliest-received radio signal is transmitted.

Functions of functional units of the wireless local area network device can be implemented by performing the steps in the foregoing embodiments. Therefore, a specific working process of the wireless local area network device provided in this embodiment of the present invention is not described herein.

FIG. 11 is another possible schematic structural diagram of a wireless local area network device in the foregoing embodiments.

The wireless local area network device includes at least a processor 1110, an antenna 1120, and a memory 1130.

The processor 1110 may be a central processing unit (CPU) or a combination of a CPU and a hardware chip. The hardware chip may be an application-specific integrated circuit (ASIC), a programmable logic device (PLD), or a combination thereof. The PLD may be a complex programmable logic device (CPLD), a field programmable gate array (FPGA), a generic array logic (GAL), or any combination thereof. The processor 1110 is configured to control the entire network device and signal processing. The processor 1110 may include a modem 1111.

The modem 1111 is configured to module/demodulate a WLAN signal. The modem 1111 is connected to the antenna 1120, to receive and transmit a WLAN signal.

The memory 1130 may include a volatile memory, for example, a random-access memory (RAM). The memory 1130 may also include a non-volatile memory, for example, a read-only memory (ROM), a flash memory (English: flash memory), a hard disk drive, or a solid-state drive. The memory 1130 may also include a combination of the foregoing types of memories. The memory 1130 is configured to store various applications, operating systems, and data. The memory 1130 may transmit the stored data to the processor 1110.

It can be understood that the memory 1130 may be integrated into the processor 1110 or may exist independently.

The antenna 1120 is configured to receive a signal. The signal includes radio signals sent by a to-be-identified terminal through a plurality of paths. The radio signal includes a first training sequence, and the signal includes superposition of a plurality of first training sequences transmitted through the plurality of paths.

The processor 1110 is configured to match the signal and a second training sequence to obtain time points at which the plurality of first training sequences are received. The second training sequence is information stored in the memory 1130, and the first training sequence and the second training sequence have a same value.

The processor 1110 is further configured to determine a path of an earliest-received radio signal as a candidate line of sight path. The earliest-received radio signal is corresponding to a first time point of the time points.

For problem-resolving implementations of components of the wireless local area network device and beneficiary effects in the foregoing embodiment, refer to method implementations and beneficiary effects shown in FIG. 4. Therefore, details are not repeated herein.

Steps of methods or algorithms described in the embodiments disclosed in this specification may be implemented by hardware, a software module executed by a processor, or a combination thereof. A software instruction may include a corresponding software module. The software module may be stored in a random access memory, a flash memory, a read-only memory, an erasable programmable read only memory (EPROM), an electrically erasable programmable read only memory (EEPROM), a hard disk, a compact disc read-only memory (CD-ROM), or any other form of storage medium well-known in the art. For example, a storage medium is coupled to a processor, so that the processor can read information from the storage medium or write information into the storage medium. Certainly, the storage medium may be a component of the processor. Certainly, the processor and the storage medium may exist in a user device as discrete components.

A person skilled in the art should be aware that in the foregoing one or more examples, functions described in this application may be implemented by hardware, software, firmware, or any combination thereof. When the present invention is implemented by software, the foregoing functions may be stored in a computer-readable medium or transmitted as one or more instructions or code in the computer-readable medium.

The objectives, technical solutions, and beneficiary effects of this application are further described in detail in the foregoing specific embodiments. It should be understood that the foregoing descriptions are merely specific embodiments of this application, but are not intended to limit the protection scope of this application. Any modification, equivalent replacement, or improvement made based on the technical solutions of this application shall fall within the protection scope of this application.

**Claims**

1. A method for determining a candidate line of sight path, wherein the method comprises:

   receiving, by a wireless local area network device, a signal, wherein the signal comprises radio signals sent by a to-be-identified terminal through a plurality of paths, the radio signal comprises a first training sequence, and the signal comprises superposition of a plurality of first training sequences transmitted through the plurality of paths;
   matching, by the wireless local area network device, the signal and a second training sequence to obtain time points at which the plurality of first training sequences are received, wherein the second training sequence is information stored in the wireless local area network device, and the first training sequence and the second training sequence have a same value; and

determining, by the wireless local area network device, a path of an earliest-received radio signal as a candidate line of sight path, wherein the earliest-received radio signal is corresponding to a first time point of the time points.

2. The method according to claim 1, wherein the matching, by the wireless local area network device, the signal and a second training sequence comprises:

performing, by the wireless local area network device, a correlation operation on the signal and the second training sequence to obtain a plurality of pulse signals; and

using, by the wireless local area network device, occurrence time points of peak values of the plurality of pulse signals as the time points at which the plurality of first training sequences are received.

3. The method according to claim 2, wherein the wireless local area network device comprises a plurality of antennas, and each of the plurality of antennas receives a different signal;

the matching, by the wireless local area network device, the signal and a second training sequence to obtain time points at which the plurality of first training sequences transmitted through the plurality of paths are received comprises:

separately matching, by the wireless local area network device, a signal received by each of the plurality of antennas and the second training sequence to obtain the time points at which the plurality of first training sequences are received by the antennas through the plurality of paths; and

the determining, by the wireless local area network device, a path of an earliest-received radio signal as a candidate line of sight path comprises:

separately determining, by the wireless local area network device, a time point at which the radio signal is received earliest by each antenna of the plurality of antennas; and

separately determining, by the wireless local area network device based on the time point at which the radio signal is received earliest by each antenna of the plurality of antennas, an angle of arrival of a path through which the earliest-received radio signal is transmitted.

4. A wireless local area network device, wherein the device comprises a receiving unit and a processing unit, wherein the receiving unit is configured to receive a signal, wherein the signal comprises radio signals sent by a to-be-identified terminal through a plurality of paths, the radio signal comprises a first training sequence, and the signal comprises superposition of a plurality of first training sequences transmitted through the plurality of paths;

the processing unit is configured to match the signal and a second training sequence to obtain time points at which the plurality of first training sequences are received, wherein the second training sequence is information stored in the wireless local area network device, and the first training sequence and the second training sequence have a same value; and

the processing unit is further configured to determine a path of an earliest-received radio signal as a candidate line of sight path, wherein the earliest-received radio signal is corresponding to a first time point of the time points.

5. The device according to claim 4, wherein the processing unit is configured to: perform a correlation operation on the signal and the second training sequence to obtain a plurality of pulse signals; and use occurrence time points of peak values of the plurality of pulse signals as the time points at which the plurality of first training sequences are received.

6. The device according to claim 5, wherein the device further comprises a plurality of receiving units, and each of the plurality of receiving units receives a different signal; and the processing unit is configured to:

separately match a signal received by each of the plurality of antennas and the second training sequence to obtain time points at which the plurality of first training sequences are received by the antennas through the plurality of paths; and

determine a time point at which the radio signal is received earliest by each antenna of the plurality of antennas; and determine, based on the time point at which the radio signal is received earliest by each antenna of the plurality of antennas, an angle of arrival of a path through which the earliest-received radio signal is transmitted.

7. A wireless local area network device, wherein the device comprises an antenna, a processor, and a memory, wherein

the antenna is configured to receive a signal, wherein the signal comprises radio signals sent by a to-be-identified terminal through a plurality of paths, the radio signal comprises a first training sequence, and the signal comprises superposition of a plurality of first training sequences transmitted through the plurality of paths;

the processor is configured to match the signal and a second training sequence to obtain time points at which the plurality of first training sequences are received, wherein the second training sequence is information stored in the memory, and the first training sequence and the second training sequence have a same value; and

the processor is further configured to determine a path of an earliest-received radio signal as a candidate line of sight path, wherein the earliest-received radio signal is corresponding to a first time point of the time points.

8. The device according to claim 7, wherein the processor is configured to: perform a correlation operation on the signal and the second training sequence to obtain a plurality of pulse signals; and use occurrence time points of peak values of the plurality of pulse signals as the time points at which the plurality of first training sequences are received.

9. The device according to claim 8, wherein there are a plurality of antennas, and each of the plurality of antennas receives a different signal; and
the processor is configured to:

separately match a signal received by each of the plurality of antennas and the second training sequence to obtain time points at which the plurality of first training sequences are received by the antennas through the plurality of paths; and

determine a time point at which the radio signal is received earliest by each antenna of the plurality of antennas; and determine, based on the time point at which the radio signal is received earliest by each antenna of the plurality of antennas, an angle of arrival of a path through which the earliest-received radio signal is transmitted.

FIG. 1

FIG. 2

AP2

AP1

$\theta_2$

$\theta_1$

Terminal

FIG. 3

---

| A plurality of antennas of an AP receive signals | S410 |

| The AP matches a to-be-matched signal and a second training sequence to obtain time points at which a plurality of first training sequences transmitted through a plurality of paths are received | S420 |

| The AP determines a path of an earliest-received to-be-matched signal as a candidate LOS path | S430 |

FIG. 4

FIG. 5

FIG. 6

FIG. 7

FIG. 8

Antenna 1    Antenna 2    Antenna 3

FIG. 9

1010 1020

Receiving unit | Processing unit

FIG. 10

Antenna 1120

Wireless local area network device

Processor 1110

Modem 1111

Memory 1130

FIG. 11

# INTERNATIONAL SEARCH REPORT

International application No.

PCT/CN2017/118018

## A. CLASSIFICATION OF SUBJECT MATTER

H04W 40/02 (2009.01) i; G01S 3/14 (2006.01) i; G01S 5/02 (2010.01) i; H04W 84/12 (2009.01) i; H04W 64/00 (2009.01)n

According to International Patent Classification (IPC) or to both national classification and IPC

## B. FIELDS SEARCHED

Minimum documentation searched (classification system followed by classification symbols)

H04W, G01S 3/-, G01S 5/-

Documentation searched other than minimum documentation to the extent that such documents are included in the fields searched

Electronic data base consulted during the international search (name of data base and, where practicable, search terms used)

CNABS; CNTXT; VEN; USTXT; WOTXT; EPTXT; CNKI; IEEE; GOOGLE: 可视, 视线, 直达, 路径, 信道, 无线局域网, 室内, 定位, 到达角, 定向, 最先, 最快, 最早, 时间, 延迟, 相位, 相关, 匹配, 训练序列, OFDM, LoS, visible, direct, path, channel, WLAN, WiFi, location, AOA, arrival angle, orientation, time, delay, phase, correlation, match, train sequence, train field, LTF

## C. DOCUMENTS CONSIDERED TO BE RELEVANT

| Category* | Citation of document, with indication, where appropriate, of the relevant passages | Relevant to claim No. |
|---|---|---|
| Y | CN 103931249 A (INTEL CORPORATION), 16 July 2014 (16.07.2014), description, paragraphs 17-72 and 113-115, and figures 1-6 | 1-9 |
| Y | CN 101075999 A (XIDIAN UNIVERSITY), 21 November 2007 (21.11.2007), description, page 12, paragraph 3 to page 15, paragraph 8 | 1-9 |
| A | US 7391368 B1 (CISCO TECH, INC.), 24 June 2008 (24.06.2008), entire document | 1-9 |
| A | CN 1470885 A (HUAWEI TECHNOLOGIES CO., LTD.), 28 January 2004 (28.01.2004), entire document | 1-9 |

☐ Further documents are listed in the continuation of Box C.  ☒ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 29 January 2018 | 15 March 2018 |

| Name and mailing address of the ISA | Authorized officer |
|---|---|
| State Intellectual Property Office of the P. R. China No. 6, Xitucheng Road, Jimenqiao Haidian District, Beijing 100088, China Facsimile No. (86-10) 62019451 | ZHANG, Yonghai Telephone No. (86-10) 88996189 |

Form PCT/ISA/210 (second sheet) (July 2009)

**INTERNATIONAL SEARCH REPORT**
Information on patent family members

International application No.

PCT/CN2017/118018

| Patent Documents referred in the Report | Publication Date | Patent Family | Publication Date |
|---|---|---|---|
| CN 103931249 A | 16 July 2014 | US 2016282447 A1 | 29 September 2016 |
| | | WO 2013070275 A1 | 16 May 2013 |
| | | US 9380471 B2 | 28 June 2016 |
| | | US 2013273935 A1 | 17 October 2013 |
| CN 101075999 A | 21 November 2007 | CN 101075999 B | 29 June 2011 |
| US 7391368 B1 | 24 June 2008 | None | |
| CN 1470885 A | 28 January 2004 | CN 1307426 C | 28 March 2007 |

Form PCT/ISA/210 (patent family annex) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201611219604

- CN 201611219561